Europäisches Patentamt

European Patent Office

Office européen des brevets

(19)

(11) Veröffentlichungsnummer : **0 231 868 B1**

## (12) EUROPÄISCHE PATENTSCHRIFT

(45) Veröffentlichungstag der Patentschrift :
**08.04.92 Patentblatt 92/15**

(21) Anmeldenummer : **87101152.4**

(22) Anmeldetag : **28.01.87**

(51) Int. Cl.$^5$ : **G11B 33/04**

---

(54) **Mehrteiliger Aufnahmebehälter.**

(30) Priorität : **05.02.86 DE 3603383**

(43) Veröffentlichungstag der Anmeldung :
**12.08.87 Patentblatt 87/33**

(45) Bekanntmachung des Hinweises auf die
Patenterteilung :
**08.04.92 Patentblatt 92/15**

(84) Benannte Vertragsstaaten :
**AT BE CH DE ES FR GB GR IT LI LU NL SE**

(56) Entgegenhaltungen :
**EP-A- 0 112 966**
**AU-A- 2 567 277**

(56) Entgegenhaltungen :
**DE-U- 8 515 950**
**DE-U- 8 602 838**
**DE-U- 8 710 338**
**US-A- 4 538 730**

(73) Patentinhaber : **Kurz Kunststoffe GmbH**
**Salztalstrasse 3**
**W-7452 Haigerloch 3-Owingen (DE)**

(72) Erfinder : **Seifert, Josef**
**Nikolausweg 30**
**W-7451 Grosselfingen (DE)**

(74) Vertreter : **Otte, Peter, Dipl.-Ing.**
**Tiroler Strasse 15**
**W-7250 Leonberg (DE)**

EP 0 231 868 B1

## Beschreibung

Stand der Technik

Die Erfindung geht aus von einem mehrteiligen Aufnahmebehälter nach dem Oberbegriff des Anspruchs 1.

Bei einem bekannten mehrteiligen Aufnahmebehälter dieser Art (Au-B-25672/77) sind die einzelnen Behälter oder Teilbehälter in Form von Kunststoffaufnahmetaschen nach Art einer Leporello-Faltung miteinander verbunden, mit anderen Worten, eine obere Randkante einer ersten Aufnahmetasche ist mit der unteren Randkante einer angrenzenden Aufnahmetasche verbunden und deren Oberkante wieder mit der Unterkante der nächstfolgenden, so daß sich sämtliche Aufnahmetaschen beim Entfalten als zusammenhängendes, lediglich durch Knicke unterbrochenes Blatt in einer Ebene darstellen.

Bekannt sind ferner mehrteilige, flache Behältnisse öder Aufnahmetaschen aufweisende Behälter (EP-A 112 966; DE-U 8515950; US-A 4 538 730), die an ihrem einen unteren Ende, dabei sämtliche Aufnahmetaschen umfassen, gelenkig fest verbunden sind und sich an ihrem anderen Ende rosettenförmig öffnen oder aufklappen lassen, etwa so, wie man zusammengefaltete Lampions öffnet, wobei dann kreisbogenförmig sich jeweils unten innen verjüngende Behältertaschen zugänglich werden. Ein solcher Behälter hat aber den Nachteil, daß im wesentlichen nur sehr dünne Gegenstände, beispielsweise Papierbogen o.dgl. eingeordnet werden können, denn die jeweilige Aufnahmetasche ist in der geöffneten Position sich nach unten innen stark verjüngend ausgebildet und in der geschlossenen Position werden die einzelnen Taschen auf die durch den unteren verbundenen Teil vorgegebene Dicke zusammengepreßt. Eine Aufnahme und sichere Lagerung sowie leichte Zugänglichkeit von solchen plattenförmigen Gegenständen, wie sie beispielsweise in Form der bekannten Ton- oder Datenträger, etwa der CD-Platten oder Disketten vorliegen, ist durch diesen Aufnahmebehälter nur schwer möglich.

Es ist auch möglich, bestimmte plattenförmige Gegenstände, beispielsweise die sogenannten Disketten für Rechner oder Computer in Stapeln anzuordnen und so zu archivieren; möchte der Benutzer dann jedoch eine bestimmte Diskette zum jeweiligen Gebrauch auswählen, dann muß bei den herkömmlichen Lagermöglichkeiten der ganze Stapel der verfügbaren Disketten sozusagen von Hand durchgeblättert werden, d.h. jeder einzelne, eine Diskette enthaltende Behälter muß beispielsweise berührt und umgelegt werden. Dies ist nachteilig und umständlich und stellt auch keine optimale Archivierungsform insbesondere für kleinere plattenförmige Gegenstände dar. Der Erfindung liegt daher die Aufgabe zugrunde, einen mehrteiligen Aufnahmebehälter, etwa eine Archivierungsbox für plattenförmige, also flache Gegenstände zu schaffen, wie sie beispielsweise in Form sogenannter CD-Platten oder disketten weit verbreitet sind, durch welchen diese Gegenstände optimal und einwandfrei gelagert und aufbewahrt sind, andererseits aber durch einen einfachen Handgriff das gesamte Archivierungssystem so vorbereitet werden kann, daß sich ein unmittelbarer Zugriff zu einem bestimmten archivierten Gegenstand ergibt und dieser auch in seiner speziellen Ausbildung, beispielsweise durch Erkennen eines optischen Beschriftungsfeldes sofort sichtbar wird, ohne daß ein zusätzliches Umlegen oder Durchblättern notwendig ist.

Vorteile der Erfindung

Die Erfindung löst diese Aufgabe mit den kennzeichnenden Merkmalen des Anspruchs 1 und hat den Vorteil, daß plattenförmige Gegenstände, insbesondere also CD-Platten oder Disketten, auch dann, wenn sie noch in einem eigenen Schutzgehäuse angeordnet sind, durch das erfindungsgemäße Archivierungssystem einfach zu handhaben und insbesondere schnell verfügbar sind, wobei lediglich durch Öffnen des mehrteiligen Aufnahmebehälters nach der Erfindung, was einem Auseinanderziehen gleichkommt, sofort sämtliche aufgenommenen und verwahrten Gegenstände auch ihrer Art nach erkennbar sind. Dies wird dadurch erreicht, daß die einzelnen Taschen jedenfalls dort Ausschnitte oder Öffnungen aufweisen, wo die aufgenommenen plattenförmigen Gegenstände mit Beschriftungen, Symbolen oder sonstigen optischen Erkennungsmitteln versehen sind. Ein Benutzer kann daher sofort alle Beschriftungsfelder beispielsweise von Disketten einsehen und hat auch sofort die gewünschte Diskette zur Entnahme zur Verfügung.

Dabei beträgt die Dicke der so gebildeten Archivierungsbox oder des Archivierungssystems wenig mehr als die Dicke der jeweils aufgenommenen plattenförmigen Gegenstände, die im folgenden lediglich noch als Disketten bezeichnet werden, um zu einer Einheitlichkeit der Ausdrücke zu gelangen, wobei es sich aber versteht, daß dieser jetzt durchlaufend verwendete Begriff der Diskette für die Erfindung nicht einschränkend ist und diese daher zur Aufnahme, Lagerung und schnellen Verfügbarkeit beliebiger plattenförmiger Gegenstände geeignet ist. Besonders geeignet ist das erfindungsgemäße Archivierungssystem zur Aufnahme von kleineren Disketten, beispielsweise der Größe 3 1/2″ oder 3″, wobei im Prinzip natürlich auch größere Daten-oder Tonträger aufgenommen werden können, beispielsweise 5 1/4″ oder 8″. Auch dies sind nur Beispielsangaben, die nicht einschränkend zu verstehen sind.

Üblicherweise weisen solche Disketten oder auch CD-Platten die Besonderheit auf, daß der magnetische scheibenförmige Datenträger oder die für die Abtastung durch Laserlicht feinste Durchbrechungen aufweisende CD-Plattenscheibe von einem (Kunststoff)Gehäuse umhüllt und so gegen Beschädigungen weitgehend geschützt sind. Außerdem kann der Lesespalt durch geeignete Mittel, etwa einen Schieber abgedeckt sein, so daß auch bei unsachgemäßer Handhabung keine Beschädigung (etwa Fingerabdrücke) auf dem Datenträger oder Tonträger erfolgen kann. Gerade Datenträger mit solchen zusätzlichen Gehäuseumhüllungen oder Schutzgehäusen sind für das erfindungsgemäße Archivierungssystem gut geeignet, wie überhaupt die Erfindung als Archivierungssystem nicht nur im EDV-Bereich, sondern auch in den Bereichen der Unterhaltungselektronik (Audio und Vidio) Verwendung finden kann.

Schließlich ist besonders vorteilhaft die zu einem einstückigen Aufnahmebehälter führende Verbindung der einzelnen Taschen des Behälters über Zwischenverbindungsmittel, die jeweils an beilen angrenzenden Taschen angelenkt sind, und zwar derart, daß bei einem Öffnen des mehrteiligen Aufnahmebehälters sämtliche Taschen nach Art einer Paralleogrammführung zwar auseinandergezogen werden, jedoch in der gleichen Ebene verbleiben und lediglich durch eine vom Benutzer gewünschte Schrägstellung auch den optischen Einblick und den manuellen Zugriff zur jeweils aufgenommenen Diskette (in ihrem Schutzgehäuse) freigeben.

Weitere Verbesserungen und Ausgestaltungen der Erfindung sind Gegenstand der Unteransprüche und in diesen niedergelegt. Hier ist besonders vorteilhaft die Möglichkeit, einen mehrteiligen Aufnahmebehälter vollkommen einstückig durch ein einheitliches Spritzgußverfahren aus einem geeigneten Kunststoff herzustellen, wobei die Verbindungsmittel über gelenkige einstückige Filmscharniere jeweils an den angrenzenden Aufnahmetaschen befestigt sind. Die Anordnung der einzelnen Taschen mit den zugehörigen einstückigen Gelenken und den Verbindungsteilen oder Übergangsflächen kann so getroffen sein, daß das komplette Teil einstückig aus Kunststoff gespritzt wird, ohne daß hierzu die Kosten erhöhende und den Herstellungsvorgang komplizierende Seitenschieber o. dgl. erforderlich sind. Die elastischen Filmscharniere dienen dann beim Schließen der so hergestellten Archivierungsbox als Federelemente, so daß die einzelnen Aufnahmetaschen beim Abeziehen einer ergänzend noch überstülpbaren Abdeckhaube automatisch auseinandergehen. Die Herstellung einer solchen Archivierungsbox ist besonders kostengünstig.

Ferner kann bei einem weiteren Ausführungsbeispiel das unmittelbare Anordnen von vorderen und hinteren Teilabdeckhauben unmittelbar an die jeweils letzten Aufnahmetaschen bzw. an einem letzten Verbindungsglied günstig sein, so daß sich bei einem Zusammenschieben des Aufnahmebehälters sofort eine völlig geschlossene einstückige Einheit mit einem diese umgebenden Gehäuse ergibt.

Zeichnung

Ausführungsbeispiele der Erfindung sind in der Zeichnung dargestellt und werden In der nachfolgenden Beschreibung im einzelnen näher erläutert. Es zeigen:

die Figuren 1 bis 5 eine erste Ausführungsform mit gelenkig befestigten DoppelzwischenVerbindungsmitteln, so daß sich eine der Bewegung eines Parallelogramms ähnelnde Öffnungs- und Schließmöglichkeit für diese Archivierungsbox ergibt, wobei

Fig. 1 eine Seitenansicht der einzelnen, den Aufnahmebehälter bildenden Taschen mit Verbindungsmitteln zeigt, teilweise im Schnitt, und

Fig. 2 eine Draufsicht auf eine der den mehrteiligen Aufnahmebehälter bildenden Taschen, gewonnen aus der Schnittdarstellung II-II der Fig. 1, und

Fig. 3 in vergrößerter Darstellung einen Teilschnitt im Bereich der gelenkigen Lagerung des Zwischenverbindungsmittels längs der Linie III-III der Fig. 2, wobei in Fig. 2 ergänzend noch eine Schnittlinie I-I dargestellt ist, die dem Teilschnittbereich der Fig. 1 entspricht;

Fig. 4 zeigt eine Schnitteildarstellung ähnlich der Darstellung der Fig. 3, jedoch im zusammengeklappten Zustand der einzelnen Taschen, und

Fig. 5 zeigt eine ein abgeschlossenes Ganzes bildende seitliche Darstellung sämtlicher, den mehrteiligen Aufnahmebehälter bildenden einzelnen Taschen in der zur Archivierung geeigneten Form, also zusammengeklappt oder zusammengefaltet und ergänzt durch eine übergestülpte Abdeckhaube;

die Figuren 6 und 7 zeigen ein weiteres Ausführungsbeispiel der Erfindung, ebenfalls mit parallelogrammartigem Bewegungsablauf einstückig durch ein Spritzgußverfahren hergestellt, nämlich

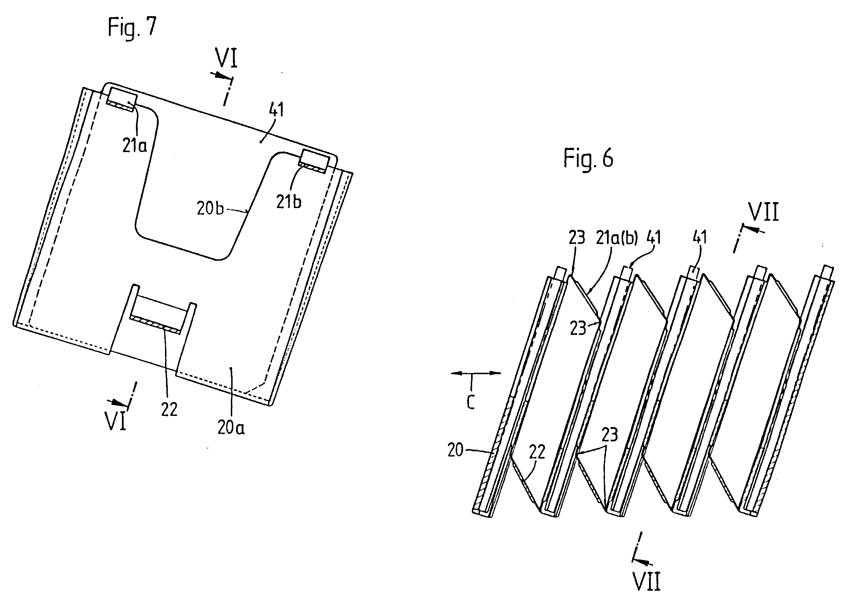

Fig. 6 eine seitliche Schnittdarstellung längs der Linie VI-VI der Fig. 7 - die Darstellung ist nicht perspektivisch -, wobei die einzelnen Taschen ebenfalls im Sinne einer Parallelogramm-Öffnungsmechanik aneinanderhängen, und

Fig. 7 eine Draufsicht auf eine der Taschen, beispielsweise längs der Schnittdarstellung VII-VII der Fig. 6;

Beschreibung der Ausführungsbeispiele

Der Grundgedanke vorliegender Erfindung besteht darin, einen mehrteiligen Aufnahmebehälter für beliebige plattenförmige Gegenstände, die auch eine nennenswerte Dicke aufweisen können, zu schaffen und wobei einzelne Aufnahmetaschen für diese Gegenstände, im folgenden als Disketten bezeichnet, gebildet sind, die so gelenkig aneinanderhängen, daß sie sich beim Öffnen des Aufnahmebehälters gleichmäßig, also an allen Stellen mit gleichem Abstand voneinander entfernen, dabei aber in der Ebene der Öffnungsbewegungsrichtung verbleichen, also zum Beispiel nicht um einen gemeinsamen Drehpunkt sternförmig auseinanderklappen.

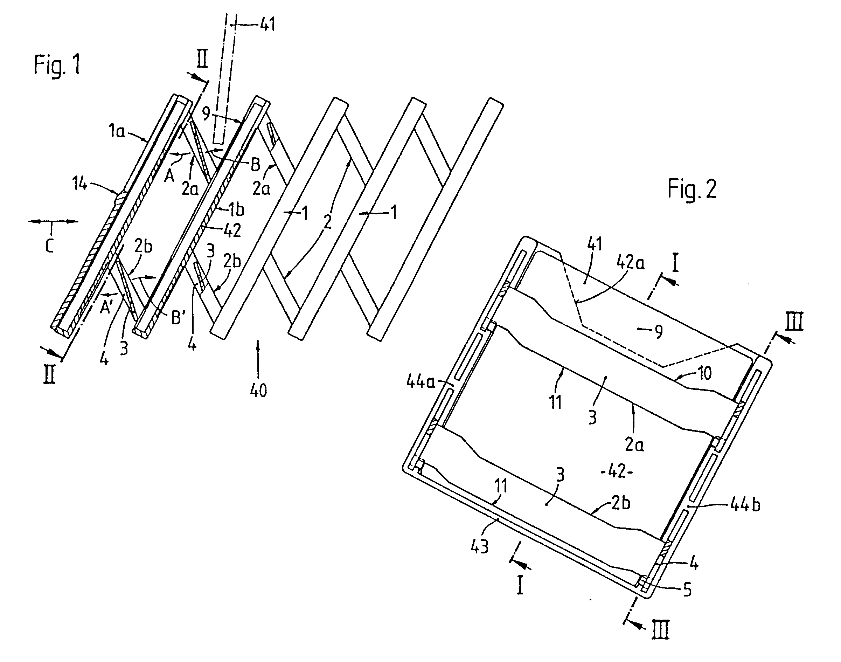

Bei dem in den Fig. 1-5 dargestellten ersten Ausführungsbeispiel mit Parallelogramm-Verbindungsmechanik der einzelnen Taschen besteht der mehrteilige Aufnahmebehälter 40 aus einer vorgegebenen, jedoch grundsätzlich beliebigen Anzahl einzelner Taschen zur Aufnahme des plattenförmigen Gegenstandes bzw. jeweils von Disketten 41. Diese Taschen 1 sind über Zwischenverbindungsmittel 2 gelenkig miteinander verbunden, und zwar bei der Ausführungsform der Fig. 1, der eine Parallelogramm-Mechanik zugrundegelegt ist, jeweils über eine obere Gelenkverbindung 2a und eine untere Gelenkverbindung 2b. Da sowohl die obere als auch die untere Gelenkverbindung 2a und 2b dort, wo sie auf die jeweils zugeordnete, also angrenzende Aufnahmetasche (jeweils vordere und hintere Aufnahmetasche 1a, 1b) anstoßen, gelenkig mit diesen Taschen verbunden sind, lassen sich die obere und untere Gelenkverbindung auf beiden Seiten entsprechend den Pfeilen A und A' sowie B und B' auf die zugeordnete Tasche zuklappen, so daß sich die Grundfunktion der Erfindung, hier im Ausführungsbeispiel der Fig. 1 ergibt, daß sich nämlich die einzelnen Taschen bei Bewegung der Taschengesamtheit in Richtung des Doppelpfeils C entweder harmonikaartig unter Wahrung der durch die obere und untere Gelenkverbindung 2a, 2b gesicherten Parallelogrammführung auseinanderziehen bzw. so aufeinanderklappen lassen, daß sie dann deckend und ohne Abstand aufeinanderliegen.

Durch Verwendung einer beliebigen Anzahl von Taschen können auf diese Weise Archivierungssysteme, nämlich mehrteilige Aufnahmebehälter gebildet werden, die unterschiedliche Aufnahmekapazitäten aufweisen, beispielsweise 5-er und 10-er Archivierungsboxen, wobei, da alle Taschen und alle Zwischenverbindungsmittel die gleiche Gestalt haben, nur ein Spritzwerkzeug jeweils erforderlich ist, wenn das Archivierungssystem insgesamt beispielsweise aus einem geeigneten Kunststoff hergestellt wird. Die einzelnen Gelenkverbindungen werden dann durch Verrastungen bzw. durch Einschnappen hergestellt.

Es versteht sich und gilt auch für die nachfolgenden Ausführungsbeispiele, daß ein bevorzugtes Material zur Herstellung der erfindungsgemäßen Ausführungsformen eines Archivierungssystems Kunststoff ist, so daß sich die einzelnen Teile durch Spritzgußverfahren oder Herstellen in bestimmten Formen gewinnen lassen - es liegt aber auch innerhalb des erfindungsgemäßen Rahmens, die einzelnen Teile aus Folien oder geeignetem Kartonmaterial etwa durch Ausstanzen von Abwicklungen und entsprechendem Falzen sowie Verkleben oder Verschweißen der Teile untereinander herzustellen, wobei hierauf nicht weiter eingegangen zu werden braucht, da die im folgenden angegebenen detaillierten Erläuterungen der Erfindungsbeispiele sich in gleicher Weise durch die Herstellung aus Karton, Kunststoffolie o. dgl. realisieren lassen.

Im einzelnen umfaßt jede Tasche 1 einen plattenförmigen Rückenteil 41, der seitlich und unten umlaufend von einer Randerhöhung vorzugsweise einstückig umgeben ist, die die Form einer U-förmigen Rippe bildet und wobei der untere Schenkel 43 der U-Form den Anschlag für den eingeführten Datenträger (Diskette 41) nach unten bildet und die beiden seitlichen Schenkel 44a, 44b (vgl. Fig. 2) die Diskette seitlich fixieren und Führungen bilden und ferner die Mittel bereitstellen, damit an ihnen die Gelenkdrehpunkte und die Anlenkbereiche für die Zwischenverbindungsmittel angeordnet werden können. Grundsätzlich werden die obere und untere Gelenkverbindung 2a, 2b in die so gebildeten Seitenteile 44a, 44b der jeweiligen Tasche eingeschnappt und lassen sich so besonders einfach montieren.

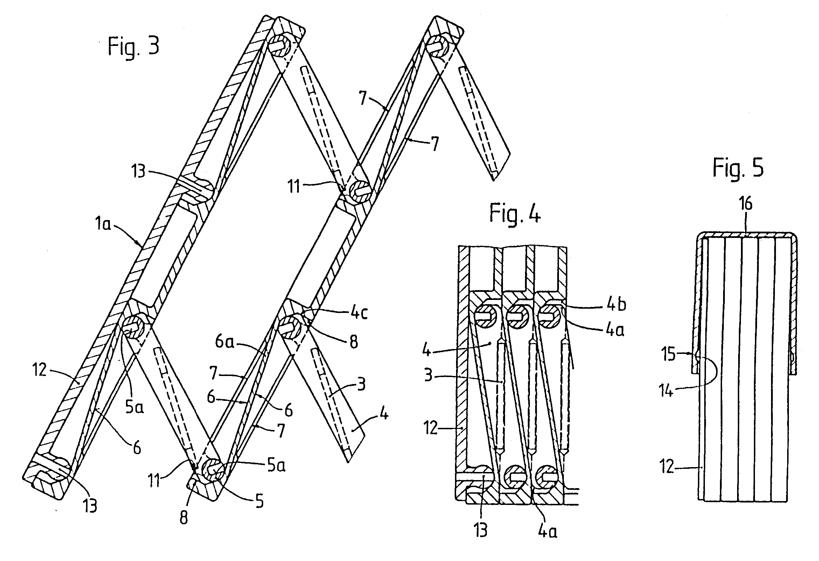

Jede untere bzw. obere Gelenkverbindung 2a, 2b (die im Aufbau identisch sind) umfaßt eine Verbindungsquerplatte 3, die an ihren Enden, ausgerichtet auf die U-förmige Umrandung einer jeweiligen Tasche 1 in zu ihr senkrecht angesetzte Rippen 4 übergeht. Es sind diese Rippen 4, die dann jeweils wieder an ihren eigenen Endbereichen die Drehpunkte 5 für die gelenkige Lagerung jeweils mit der angrenzenden Tasche bilden, beim Ausführungsbeispiel der Fig. 1 also mit der vorderen Tasche 1a und der hinteren Tasche 1b. Diese gelenkigen Drehpunkte können so beschaffen sein, daß von den Endbereichen der Rippen jeweils mit diesen einstückige Drehzapfen 5 ausgehen, die zum Einrasten der Zapfen in entsprechende, in der Zeichnung nicht weiter dargestellte und Gegenlagerungen an der Tasche bildende Aufnehmungen eine mittlere nut 5a aufweisen können, so daß sich beim Einrasten ein Zusammenfedern der Drehzapfen ergibt mit einer anschließenden Verriegelung in der Gegenlagerung der Tasche. Damit beim gleichmäßigen Auseinanderziehen der einzelnen Taschen die so gebildete Parallelogramm-Führung möglich ist, müssen die jeweiligen Zwischenverbindungsmittel, also obere und untere Gelenkverbindung 2a, 2b jeweils an der vorderen Tasche an einer anderen Vertikalposition drehbar verrastet sein, als an der unteren Tasche, was ohne weiteres einsichtig ist, so daß beim Auseinanderziehen die im geschlossenen Zustand der so gebildeten Diskettenbox direkt aneinanderliegenden Taschen die in Fig. 1 oder Fig. 3 gezeigte Schräglage zueinander bekommen und gleichzeitig so im gleichmäßigen Abstand geöffnet werden, daß optische Inspektion und/oder Entnahme der aufgenommenen Diskette möglich ist. Damit in dem zusammengeklappten Zustand das unmittelbare Aneinanderliegen der Taschen möglich ist, tauchen die seitlichen Rippen 4 der Gelenkverbindungen 2a, 2b in entsprechende Ausnehmungen 6 der Taschenumrandung und die Verbindungsquerplatten 3 in Ausnehmungen 7 ein (s. Fig. 3). Dabei verlaufen die Ausnehmungen, jeweils nach vorn und hinten gebildet durch eine schräge Mitten-oder Trennwand 6a, vom jeweiligen Drehpunkt aus konisch verjüngend, so daß in der zusammengeklappten Form, wie sie in Fig. 4 dargestellt ist, die Rippen 4 in etwa jeweils zur Hälfte in der Ausnehmung 6 der angrenzenden vorderen Tasche und zur Hälfte in der Ausnehmung 6 der angrenzenden hinterer. Tasche zu liegen kommen. Hier sind natürlich auch andere Lösungen denkbar; allerdings ist die dargestellte Verteilung deshalb vorteilhaft, weil jede Gelenkverbindung jeweils einen Drehpunkt mit der jeweils vorderen Tasche und mit der jeweils hinteren Tasche bilden muß.

Es versteht sich, daß die jeweiligen Gelenkverbindungen auch durch entsprechende Querstifte oder ähnliche Drehelemente die Drehpunkte für die Parallelogrammführung bilden können, die dann gesondert einzusetzen wären.

Eine solche Archivierungsbox kann so weit geöffnet werden, bis obere und untere Randkanten 4a der Rippen 4 an jeweils oberen und unteren, im geschlossenen Zustand im bestand zu ihnen angeordneten, von Querstegen der seitlichen Umrandung der Taschen gebildetenAnschlagflächen 4b anliegen, wie sich dies am besten bei 4c in Fig. 3 entnehmen läßt. Durch die Schrägstellung der Gelenkverbindungen mit ihren Verbindungsquerplatten 3 im geöffneten Zustand sind die Beschriftungsflächen 9 von archivierten Disketten 41 sofort einsehbar, so daß eine ausgewählte Diskette dann einfach nach oben herausgezogen werden kann. Bis auf die quer verlaufenden Verbindungsquerplatten der Gelenkverbindungen sind die Taschen 1 nach vorne, also in der Zeichenebene der Fig. 1 und 3 von links aus gesehen, offen - allerdings stellt in der geöffneten Diskettenbox die untere Kante 11 der Querverbindungsplatte 3 eine Begrenzung der Diskette nach vorn dar, während bei geschlossener Archivierungsbox die ganze Querverbindungsplatte 3 und natürlich auch das plattenförmige Rückenteil 42 der sich nach vorn jeweils anschließenden Tasche die vordere Begrenzung für die eingeführte Diskette bilden. Um im geöffneten Zustand eine leichte Entnahme der jeweiligen Diskette zu ermöglichen, kann der plattenförmige Rückenteil noch, wie bei 42a gezeigt, einen Ausschnitt geeigneter Form, beispielsweise schräg nach unten und dann wieder nach oben laufend, aufweisen.

Durch die im geöffneten Zustand der Archivierungsbox schrägstehende Querverbindungsplatte 3 der jeweils oberen Gelenkverbindung 2a bei jeder Tasche wird das belegen der jeweiligen Diskette so einfach, da diese lediglich in die zwischen der jeweiligen Querverbindungsplatte und der Tasche gebildete V-förmige Öffnung eingelegt zu werden braucht ur.d dann selbständig in die richtige Position eingleitet.

Wie aus der Darstellung der Fig. 3 am besten erkennbar, fehlen (notwendigerweise) an der in der Abfolge ersten Tasche 1a die Gelenkverbindungen der Zwischenverbindungsmittel, so daß, um ein herausfallen der hier eingelegten Diskette zu vermeiden, noch eine Fronplatte 12 vorgesehen ist, die mittels geeigneter Schnappverbindungen 13 in die beiden freien Drehpunktausnehmungen zum stationären Verbleib eingesetzt wird.

In vorteilhafter Ausgestaltung kann diese Frontplatte, wie in Fig. 5 bei 14 gezeigt, noch eine Rastnase aufweisen, die in einer Ausnehmung 15 einer noch vorzusehenden Abschlußhaube 16 verriegelnd eingreift, so daß, beispielsweise für den Transport, die so gebildete Archivierungsbox zusammengehalten wird und staubdicht verschlossen bleibt. Der staubdichte Verschluß ergibt sich durch die am äußeren Umfang geschlossen ausgebildete U-förmige Umrandung des plattenförmigen Rückenteils jeder Tasche.

Das in den Figuren 6 und 7 dargestellte Ausführungsbeispiel ähnelt mit Bezug auf die Parallelogrammführung der insoweit aneinanderhängenden Taschen der Archivierungsbox im Ausführungsbeispiel der Figuren 1-5, mit dem Unterschied, daß hier, bei sonst gleicher Beschaffenheit der einzelnen Taschen - mit Ausnahme der Bildung der Gelenkdrehpunkte - die Gelenkpunkte von den Randbereichen jeder Tasche in die vorderen und hinteren Hauptflächen verlegt sind.

Bei diesem Ausführungsbeispiel läßt sich die Archivierungsbox in vorteilhafter Weise im ganzen einstückig durch einen geeigneten Spritzgußvorgang herstellen, die Taschen 20 sind dabei so aufgebaut, daß sie eine Rückenplatte 20a mit Griffausnehmung 20b und in mindestens teilweiser Umrandung seitliche und untere Haltemittel für den einzulegenden plattenförmigen Gegenstand, also die Diskette 41 als bevorzugtes Ausführungsbeispiel, aufweisen. Entsprechend der Darstellung der Fig. 7 gehen jeweils von der Rückplatte 20a jeder Tasche 20 zungenartige Zwischenverbindungsmittel aus, die bei dem besonderen, in den Figuren 6 und 7 dargestellten Ausführungsbeispiel aus zwei jeweils rückseitig links und rechts oben angeordneten Gelenkverbindungen 21a, 21b sowie einer in der Mitte im unteren Teil sitzenden dritten Gelenkverbindung 22 bestehen. Diese Gelenkverbindungen 21a, 21b und 22 bestehen in den Anlenkungsbereichen aus, wie bei 23 festgestellt werden kann, verdünntem Material, so daß sich Filmscharniere des Kunststoffmaterials der Gelenkverbindungen ergeben, die ein vollständiges Zusammenklappen und Aufeinanderlegen der Aufnahmtaschen für die Disketten auch hier ermöglichen, indem diese Filmscharniere entweder zur Realisierung der Parallelogramm-Führung und -fixierung der einzelnen Taschen aneinander entweder einen vollständigen Knick bilden oder geradlinig dann verlaufen, wobei die jeweiligen verdickten Zwischenteile der Gelenkverbindungen sich in entsprechende Ausnehmungen der Taschen vorn und hinten einfügen.

Es versteht sich, daß die auf der jeweiligen Rückenseite jeder Tasche links oben und rechts oben sowie in der Mitte unten angesetzten Filmscharniere jeweils auf der anderen Seite mit der dann angrenzenden Vorderseite der Taschen Filmscharniere an Stellen bilden, die gegenüber den ersten Scharnieren auf der Rückseite höhenversetzt sind, und zwar bei dieser Ausführungsform jeweils nach unten, so daß sich entsprechende Anlenkungen entweder an der unteren Randkante der Vorderseite jeder Tasche bzw. an einer, die Seitenteile verbindenden mittleren Querfläche ergeben. Auch hier erzielt man beim Auseinanderziehen der einzelnen Taschen aus der geschlossenen Form entsprechend der durch den Doppelpfeil C angegebenen Bewegungsrichtung ein Öffnen insbesondere der oberen Sicht-und Griffbereiche jeder Tasche, so daß die optische Kontrolle und Auswahlmöglichkeit sowie der manuelle Zugriff problemlos möglich sind.

Die Darstellung der Fig. 6 zeigt die Ausführungsform einer solchen einstückigen Archivierungsbox mit Parallelogramm-Mechanik in der Form, in welcher sie auch gespritzt wird - man kann daher das gesamte Teil einstückig aus Kunststoff herstellen, ohne daß z. B. das Spritzwerkzeug verteuernde und komplizierende Seitenschieber notwendig sind.

Da die Filmscharniere an den Gelenkpunkten 23 wie Federelemente wirken, gehen die Taschen beim Abziehen der in Fig. 5 schon erwähnten, auch hier verwendbaren Abdeckhaube automatisch auseinander. Sie lassen sich in gleicher Weise problemlos durch Druck auf die vordere und hintere Tasche wieder zusammenlegen.

Eine bevorzugte Ausgestaltung besteht dann noch darin, daß an das letzte Verbindungsgelenkstück bzw. an die erste Tasche jeweils ein Verschlußteildeckel angekoppelt werden kann, die dann zusammen ein insgesamt staubdichtes Gehäuse bilden.

Zum Öffnen einer solchen Archivierungsbox werden zweckmäßigerweise am Gehäuse vorgesehene

Rastnasen überwunden bzw. betätigt, so daß das Vorderteil dann nach unten geklappt und die Archivierungsbox durch Ziehen an den Deckelteilen geöffnet werden kann.

## Patentansprüche

1. Mehrteiliger Aufnahmebehälter, insbesondere Archivierungsbox für plattenförmige Gegenstände wie Speichermittel in Form von Ton- oder Datenträgern (CD-Platten, Disketten (41)), wobei für jeden, gegebenenfalls noch in einem eigenen Schutzgehäuse untergebrachten plattenförmigen Gegenstand eine separate Aufnahmetasche (1, 1a, 1b, 20) gebildet ist und jede Aufnahmetasche mit der oder den jeweils unmittelbar angrenzenden Aufnahmetaschen über Zwischenverbindungsmittel gelenkig verbunden ist, so daß die Abfolge der miteinander verbundenen Aufnahmetaschen durch Auseinanderziehen geöffnet werden kann, dadurch gekennzeichnet, daß jede Aufnahmetasche (1, 1a, 1b; 20) auf jeder ihrer einer angrenzenden Aufnahmetasche zugewandten Seite durch mindestens zwei zueinander höhenversetzt einen Abstand aufweisenden, die Zwischenverbindungsmittel bildenden Gelenkverbindungen (2a, 2b; 21a, 21b, 22) mit der oder den angrenzenden Aufnahmetaschen (1, 1a, 1b; 20) nach Art einer Parallelogrammführung verbunden ist.

2. Mehrteiliger Aufnahmebehälter nach Ansspruch 1, dadurch gekennzeichnet, daß jede einzelne Aufnahmetasche aus einer oberen, eine Griffausnehmung (42a) aufweisenden Rückenplatte (42) mit U-förmiger Umrandung seitlich und unten besteht und daß die jeweiligen oberen und unteren Gelenkverbindungen (2a, 2b) sich mit einer Verbindungsquerplatte (3) in Querrichtung jeweils zu jeweils angrenzenden Vorder- und Rückseiten der Aufnahmetaschen erstrecken und seitlich angesetzte Rippen (4) aufweisen, die obere und untere Gelenkpunkte in Verbindung mit beidseitigen seitlichen Schenkeln (44a, 44b) der U-förmigen Umrandung bilden.

3. Mehrteiliger Aufnahmebehälter nach Anspruch 2, dadurch gekennzeichnet, daß die Drehpunkte der Gelenkverbindungen (2a, 2b) gebildet sind jeweils von von den seitlichen Rippen (4) der Gelenkverbindungen vorspringenden Drehzapfen (5), die in entsprechende Lagerausnehmungen der seitlichen Rückenumrandung eingreifen.

4. Mehrteiliger Aufnahmebehälter nach Anspruch 3, dadurch gekennzeichnet, daß die Drehzapfen durch eine mittlere Nut (5a) zur Einführung in die Lagerausnehmungen in ihrer Form durch Zusammendrücken und späteres Aufweiten verrastbar ausgebildet sind.

5. Mehrteiliger Aufnahmebehälter nach einem der Ansprüche 1 bis 4, dadurch gekennzeichnet, daß die Rippen (4) und die Verbindungsquerplatten (3) der oberen und unteren Gelenkverbindung (2a, 2b) der Parallelogrammführung in Aufnahmeausnehmungen (6, 7) mindestens einer angrenzenden Aufnahmetasche eintauchen.

6. Mehrteiliger Aufnahmebehälter nach Anspruch 5, dadurch gekennzeichnet, daß jede Aufnahmetasche auf ihrer vorderen und ihrer Rückseite im Bereich der U-förmigen Umrandung (44a, 44b, 43), also beidseitig vorne und hinten die Aufnahmeausnehmungen (6, 7) aufweist, derart, daß die Gelenkverbindungen (2a, 2b) mit Verbindungsquerplatte (3) und seitlichen Rippen jeweils gleichmäßig anteilige in diese Aufnahmeausnehmungen der jeweils vorderen bzw. hinteren angrenzenden Aufnahmetasche eintauchen.

7. Mehrteiliger Aufnahmebehälter nach einem der Ansprüche 1 bis 6, dadurch gekennzeichnet, daß durch die obere Gelenkverbindung (2a) und die jeweils nachfolgende Aufnahmetasche ein V-förmiger Aufnahmeund Einführungsschlitz für einen plattenförmigen Gegenstand gebildet ist, der gleichzeitig eine optische Überprüfung und Identifizierung der in der so gebildeten Archivierungsbox eingesetzten plattenförmigen Gegenstände (Disketten 41) ermöglicht.

8. Mehrteiliger Aufnahmebehälter nach einem der Ansprüche 1 bis 8, dadurch gekennzeichnet, daß zur Begrenzung des Auseinanderziehens der einzelnen Aufnahmetaschen unter der Parallelogrammführung Anschläge seitlicher Rippenendteile an zugeordneten Anschlagsflächen im Bereich der jeweiligen Gelenkdrehpunkte gebildet sind.

9. Mehrteiliger Aufnahmebehälter nach einem der Ansprüche 1 bis 8, dadurch gekennzeichnet, daß eine sämtliche die Archivierungsbox bildenden Aufnahmetaschen im geschlossenen Zustand aufnehmende und mindestens im oberen Bereich abdeckende, vorzugsweise nach unten offene bedeckhaube (16) vorgesehen ist.

10. Mehrteiliger Aufnahmebehälter nach Anspruch 9, dadurch gekennzeichnet, daß die Abdeckhaube (16) mindestens mit einer der angrenzenden Taschen verrastbar ist.

11. Mehrteiliger Aufnahmebehälter nach Anspruch 1, dadurch gekennzeichnet, daß die Zwischenverbindungsmittel als einstückig mit den Taschen verbundene und an den jeweiligen Verbindungspunkten Gelenke in Form von Filmscharnieren (23) bildende Gelenkverbindungen (21a, 21b; 22) ausgebildet sind.

12. Mehrteiliger Aufnahmebehälter nach Anspruch 11, dadurch gekennzeichnet, daß die einstückigen Gelenkverbindungen (21a, 21b, 22) jeweils von den vorderen und hinteren Hauptflächen jeder im Verbund enthaltenen Tasche (20) ausgehen und in den Anlenkbereichen zur Bildung der Filmscharniere verdünnte Materialstege aufweisen.

13. Mehrteiliger Aufnahmebehälter nach Anspruch 11 oder 12, dadurch gekennzeichnet, daß jeweils zwei Gelenkverbindungen (21a, 21b) links und rechts oben auf jeder Taschenrückseite und eine mittlere im unteren Bereich vorgesehen sind, die höhenversetzt jeweils an der nachfolgenden Vorderseite der nächsten Aufnahmetasche in gleicher Weise einstückig mit dieser verbunden sind derart, daß die gesamte, so gebildete Archivierungsbox als einstückiges Spritzgußteil herstellbar ist.

## Claims

1. A multi-part receptacle, in particular an archiving box for plate-shaped objects such as storage media in the form of sound or data carriers (compact discs, floppy discs (41)), a separate receiving pocket (1, 1a, 1b, 20) being formed for each plate-shaped object, which may still be accommodated in its own protective casing, and each receiving pocket being flexibly connected to the directly adjacent receiving pocket(s) via intermediate connecting means, so that the sequence of the interconnected receiving pockets can be opened by pulling them apart, characterised in that, on each side facing an adjacent receiving pocket, each receiving pocket (1, 1a, 1b; 20) is connected in the manner of a parallel-motion device to the adjacent receiving pocket(s) (1, 1a, 1b; 20) by at Least two hinge connections (2a, 2b; 21a, 21b, 22) which are offset vertically at a distance from one another and which form the intermediate connecting means.

2. A multi-part receptacle according to Claim 1, characterised in that each individual receiving pocket consists of an upper rear plate (42) with a handle recess (42a) and U-shaped edging at the sides and at the bottom and in that the respective upper and lower hinge connections (2a, 2b) each extend with a transverse connecting plate (3) in the transverse direction to respective adjacent front and rear sides of the receiving pockets, and have ribs which are attached to the sides and form the upper and lower hinge points in conjunction with lateral arms (44a, 44b) of the U-shaped edging located on both sides.

3. A multi-part receptacle according to claim 2, characterised in that the points of rotation of the hinge connections (2a, 2b) are each formed by pivots (5) which project from the lateral ribs (4) of the hinge connections and engage in corresponding bearing recesses of the lateral rear edging.

4. A multi-part receptacle according to claim 3, characterised in that, as a result of a central groove (5a) for insertion into the bearing recesses, the shape of the pivots is such that they can be locked by compression and subsequent expansion.

5. A multi-part receptacle according to any one of claims 1 to 4, characterised in that the ribs (4) and the transverse connecting plates (3) of the upper and lower hinge connection (2a, 2b) of the parallel-motion device dip into receiving recesses (6, 7) of at least one adjacent receiving pocket.

6. A multi-part receptacle according to claim 5, characterised in that each receiving pocket has the receiving recesses (6, 7) on its front and its rear side in the region of the U-shaped edging (44a, 44b, 43), i.e. on both sides, at the front and the rear, in such a manner that the transverse connecting plate (3) and the lateral ribs of the hinge connections (2a, 2b) each dip in even proportions into these receiving recesses of the respective front or rear adjacent receiving pocket.

7. A multi-part receptacle according to any one of claims 1 to 6, characterised in that the upper hinge connection (2a) and the respective following receiving pocket form a V-shaped receiving and insertion slit for a plate-shaped object, which at the same time allows optical examination and identification of the plate-shaped objects (floppy discs 41) inserted in the archiving box formed in this manner.

8. A multi-part receptacle according to any one of claims 1 to 8, characterised in that, in order to limit the extent to which the individual receiving pockets can be pulled apart under parallel motion, limit stops of lateral rib-end-parts are formed on associated stop faces in the region of the respective hinge points of rotation.

9. A multi-part receptacle according to any one of claims 1 to 8, characterised in that a covering hood (16) is provided which in the closed state receives all the receiving pockets forming the archiving box, provides covering, at least in the upper region, and is preferably open towards the bottom.

10. A multi-part receptacle according to claim 9, characterised in that the covering hood (16) can be locked with at least one of the adjacent pockets.

11. A multi-part receptacle according to Claim 1, characterised in that the intermediate connecting means are formed as hinge connections (21a, 21b; 22) connected to the pockets so as to be in one piece therewith and forming hinges in the form of film hinges (23) at the respective connecting points.

12. A multi-part receptacle according to claim 11, characterised in that the one-piece hinge connections (21a, 21b, 22) each extend from the main front and rear faces of each pocket (20) held in the assembly and have thin material webs in the hinge regions for forming the film hinges.

13. A multi-part receptacle according to Claim 11 or 12, characterised in that two hinge connections (21a, 21b) are provided at the top left and top right of the rear side of each pocket and a central one is provided in the lower region, which, each offset vertically on the following front side of the next receiving pocket, are likewise connected to the latter so as to be in one piece therewith, so that the entire archiving box formed in this manner can be manufactured as a one-piece injection moulded part.

## Revendications

1. Réceptacle en plusieurs pièces notamment boîte d'archivage pour des produits en forme de plaque tels que des moyens de mise en mémoire sous la forme de support de données ou de sons (disques compacts, disquettes (41)) et pour chaque produit en forme de plaque le cas échéant logé dans un boîtier de protection qui lui est propre, il est prévu une poche distincte (1, 1a, 1b, 20) et chaque poche est reliée de manière articulée à la ou aux poches directement adjacentes par des moyens de liaison intermédiaires, de façon que la succession des poches ainsi réunies puissent s'ouvrir par déploiement en traction, réceptacle caractérisé en ce que chaque poche (1, 1a, 1b ; 20) comporte sur son côté tourné vers une poche de réception adjacente, au moins deux liaisons articulées (2a, 2b, 21a, 21b, 22) décalées en hauteur et distantes, formées par des moyens de liaison intermédiaires, liaisons articulées qui sont reliées à la ou aux poches adjacentes (1, 1a, 1b, 20) à la manière d'un moyen de guidage en parallélogramme.

2. Réceptacle en plusieurs parties selon la revendication 1, caractérisé en ce que chaque poche se compose d'une plaque arrière (42) supérieure, ayant une cavité de préemption (42a), avec latéralement et à sa partie inférieure un bord en forme de U et en ce que les liaisons articulées supérieures et inférieures respectives (2a, 2b) s'étendent avec une plaque de liaison (3) dans la direction transversale, chaque fois vers la face avant et la face arrière adjacente respective des poches et comportant des nervures latérales (4) qui forment les points d'articulation supérieurs et inférieurs en liaison avec les branches latérales, des deux côtés (44a, 44b) du bord en forme de grand U.

3. Réceptacle en plusieurs parties selon la revendication 2, caractérisé en ce que les points de rotation des liaisons articulées (2a, 2b) sont respectivement formés par des tourillons (5) en saillie des nervures latérales (4) formant les liaisons articulées, tourillons qui viennent prendre dans des cavités de palier correspondantes du bord latéral arrière.

4. Réceptacle en plusieurs parties selon la revendication 3, caractérisé en ce que les tourillons comportent une rainure médiane (5a) pour permettre leur introduction dans les cavité de palier avec encliquetage dans leur forme par compression puis de nouveau en déploiement.

5. Réceptacle en plusieurs parties selon l'une des revendications 1 à 4, caractérisé en ce que les nervures (4) et les plaques de liaison transversales (3) de la liaison articulée supérieure et inférieure (2a, 2b) du guidage en parallélogramme pénètrent dans les cavités (6, 7) d'au moins une poche adjacente.

6. Réceptacle en plusieurs parties selon la revendication 5, caractérisé en ce que chaque poche comporte sur son côté avant et sur son côté arrière, au niveau du bord périphérique en forme de U (44a, 44b, 43), c'est-à-dire de part et d'autre à l'avant et à l'arrière, des cavités de réception (6, 7) telles que les liaisons articulées (2a, 2b) avec la plaque de liaison transversale (3) et les nervures latérales pénètrent respectivement dans les cavités de réception de la poche avant et arrière respectivement adjacente.

7. Réceptacle à plusieurs parties selon l'une des revendications 1 à 6, caractérisé en ce que la liaison articulée supérieure (2a) et la poche respectivement suivante comportent une fente de réception et d'introduction en forme de V pour un produit en forme de plaque qui permet en même temps un contrôle optique et une identification du produit en forme de plaque (disquette 41) placée dans la boîte d'archivage ainsi formé.

8. Réceptacle en plusieurs parties selon l'une des revendications 1 à 8, caractérisé en ce que pour limiter le déploiement des différentes poches par le moyen de guidage en parallélogramme, il y a des butées sur les parties de nervures latérales au niveau des surfaces d'appui correspondantes dans la zone des points d'articulation respectifs.

9. Réceptacle en plusieurs parties selon l'une des revendications 1 à 8, caractérisé par une coiffe de recouvrement (16) ouverte vers le bas, qui reçoit toutes les poches formant la boîte d'archivage à l'état fermé et recouvre au moins leur zone supérieure (coiffe 16).

10. Réceptacle en plusieurs parties selon la revendication 9, caractérisé en ce que la coiffe de recouvrement (16) peut s'accrocher sur au moins l'une des poches adjacentes.

11. Réceptacle en plusieurs parties selon la revendication 1, caractérisé en ce que les moyens de liaison intermédiaires font corps avec les poches et sont réalisés sous la forme de films formant charnière (23) constituant les liaisons articulées (21a, 21b,22) au niveau des articulations des points de liaison respectifs.

12. Réceptacle en plusieurs parties selon la revendication 11, caractérisé en ce que les liaisons articulées (21a, 21b, 22) faisant corps, partent respectivement des surfaces principales avant et arrière de chaque poche (20) de l'ensemble et présentent des voiles de matière d'épaisseur diminuée pour former des films constituant des charnières dans les zones d'articulation.

13. Réceptacle en plusieurs parties selon les revendications 11 ou 12, caractérisé en ce que chaque point de liaison d'articulation (21a, 21b) sont prévus à gauche et à droite au-dessus de chaque côté arrière de la poche et une liaison médiane est prévue dans la zone inférieure, et celle-ci est décalée en hauteur chaque fois sur la face avant suivante de la poche suivante, en étant réalisée de la même manière dans la matière de celle-ci de façon que l'ensemble de la boîte d'archivage ainsi formé puisse être réalisé comme pièce injectée en une seule partie.

Fig. 1

Fig. 2

Fig. 5

Fig. 4

Fig. 3

Fig. 6

Fig. 7